**Europäisches Patentamt**

**European Patent Office**

**Office européen des brevets**

(19)

(11) Publication number: **0 188 358**
**A2**

(12) # EUROPEAN PATENT APPLICATION

(21) Application number: **86300188.9**

(22) Date of filing: **14.01.86**

(51) Int. Cl.⁴: **E 02 B 1/00**

(30) Priority: **16.01.85 GB 8501104**

(43) Date of publication of application:
**23.07.86 Bulletin 86/30**

(84) Designated Contracting States:
**DE FR GB IT NL**

(71) Applicant: **BARPRO LIMITED**
**44 Victoria Street**
**Aberdeen AB1 1XA(GB)**

(72) Inventor: **Barrows, Brian Faraday**
**38 Cammo Grove Barnton**
**Edinburgh EH4 8EX(GB)**

(74) Representative: **Murgitroyd, Ian G. et al,**
**Ian G. Murgitroyd and Company 49 Bath Street**
**Glasgow G2 2DL(GB)**

(54) Antifouling material.

(57) An antifouling material for structural members comprises a sheet of copper alloy and elastomeric material having antifouling properties. The sheet is extendable around a structural member such that opposite end portions of the sheet lie adjacent to one another. Fastening means in the form of a buckle and strap or over centre buckle are provided to affix the sheet under tension on the structural member.

_fig 2a_

EP 0 188 358 A2

Croydon Printing Company Ltd.

## Antifouling Material

This invention relates to antifouling material especially but not exclusively for use on subsea structures.

## Background of the Invention

There are a number of difficulties involved in applying conventional antifouling coatings to subsea structures whilst they are in their working environment. The difficult conditions in such environments cause particular problems especially in cases where the application of an antifouling coating requires several different operations to be carried out.

## Brief Summary of the Invention

According to the present invention there is provided an antifouling material for structural members comprising a sheet of material having antifouling properties, the sheet being extendable around said structural member such that opposite end portions of the sheet lie adjacent to one another, and fastening means being provided to affix the sheet under tension on the structural member.

Preferably, the sheet of material is a copper alloy and elastomeric material composite.

Preferably also, the elastomeric material conforms to surface irregularities on the structural member so as to impede the ingress of water between the sheet and the structural member.

Preferably also, the elastomeric material has its inner surface coated with a formulation of elastomeric compound and corrosion inhibitor to conform further to the surface of the structural member and to prevent the formation of corrosion due to any trapped moisture.

Most preferably, the corrosion inhibitor is a biocide which destroys the bacteria which causes corrosion.

Preferably also, the fastening means is in the form of copper-containing material fastening members, the copper ensuring that the fastening members remain free of fouling and thus remain easily accessible for removal or inspection.

The fastening member may, for example, be in the form of a strap and buckle fastener or an over centre buckle arrangement.

Preferably, the sheet of material has bevelled edges so that in use adjacent sheets seal effectively one to another.

Brief Description of the Several Views of the Drawings

Embodiments of the present invention will now be described, by way of example, with reference to the accompanying drawings, in which:

Figs. 1a, 1b and 1c are plan, end and side views respectively of one embodiment of an antifouling coating in accordance with the present invention;

Fig. 2a is a side view of a structural member having an antifouling coating affixed to it;

Fig. 2b is a sectional end view corresponding to Fig. 2a;

Figs. 3a and 3b are plan and side views respectively of a second embodiment of an antifouling coating in accordance with the present invention;

Fig. 4 is a side view, to a larger scale, of a fastening member of the antifouling coating of Fig. 3;

Figs. 5a to 5f illustrate sequentially the steps involved in applying an antifouling coating of this invention to a structural member;

Fig. 6 is a perspective view of a pipeline having an antifouling coating affixed to it; and

Fig. 7 is a plan view of a further embodiment of an antifouling coating in accordance with the present invention.

Detailed Description

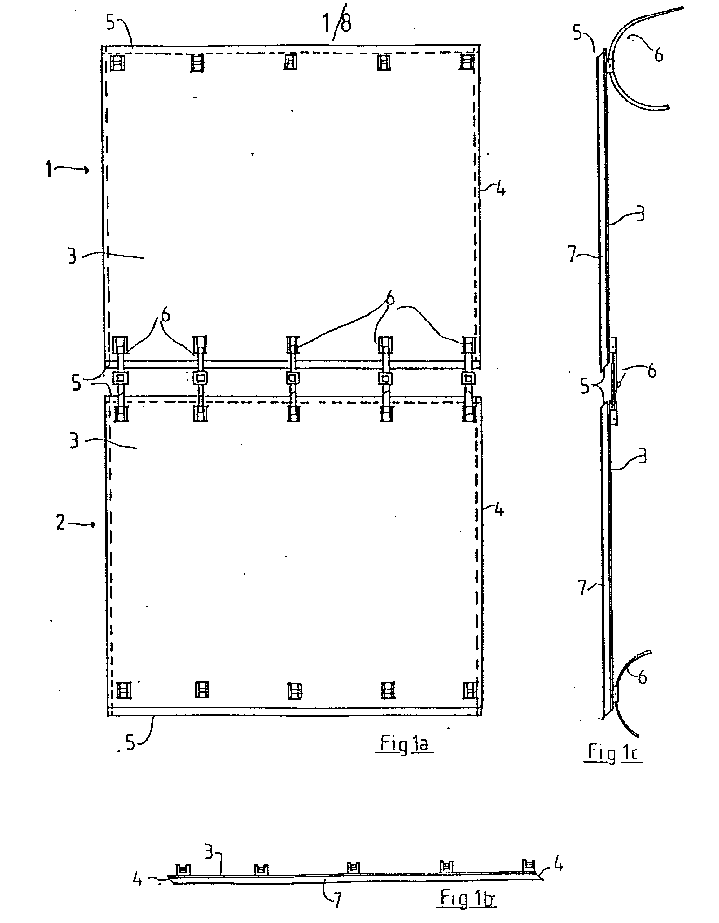

Referring to the drawings, one embodiment of an antifouling coating suitable for affixing to tubular steel structures is illustrated in Fig. 1.

The coating has two sections 1 and 2. These sections 1 and 2 consist of an outer panel of antifouling composite 3 configured in sizes easily handled by divers and are provided with bevelled edges 4 and vertical seams 5 to ensure that good seals are provided between adjacent panels in use when tension is applied to tensioning straps 6. The composite 3 is backed with a very soft cured elastomer 7 of 30 shore hardness. The elastomer 7 has sufficient thickness to accommodate weld seams and other surface irregularities in a steel surface to be protected, providing sufficient conformity with the steel's profile to prevent water ingression between the panel and the steel since this would cause adverse corrosion.

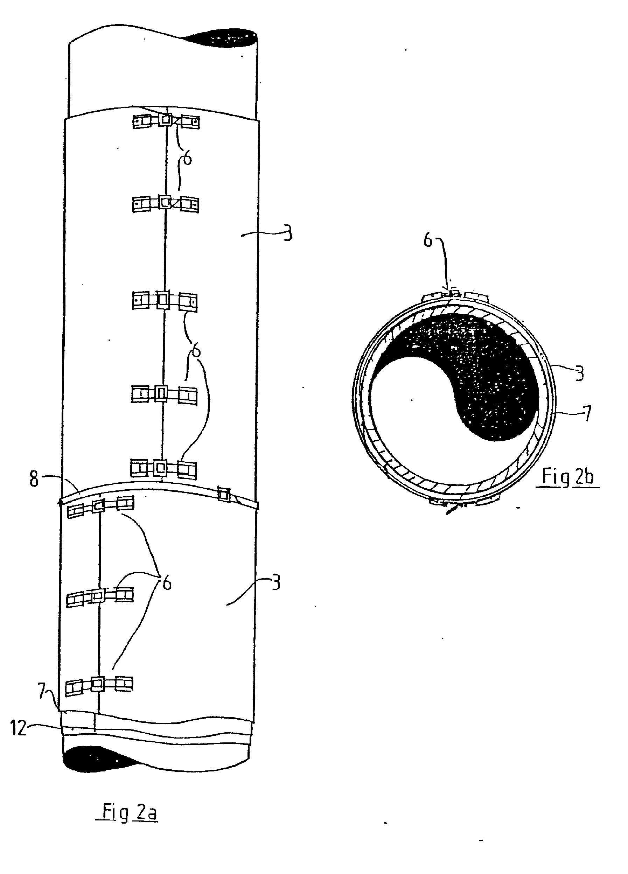

The inner surface of the elastomer is coated with a formulation of elastomeric compound and a suitable corrosion inhibitor 12 (Fig. 2a) to conform further to the steel surface to ensure no water ingresses by capilliary action via the fine surface grain structure of the steel. This is painted onto the inner surface in a thin film prior to installation and allowed to dry. The corrosion inhibitor prevents Hydrogen sulphide corrosion resulting from any trapped moisture at the surface of the steel. A suitable inhibitor is a biocide "Prentol G" which is compounded into the elastomer.

The tensioning straps 6 are in the form of Cupro Nickel fasteners which are used to tension the vertical seams to 250-300 psi in use and ensure a tight fit preventing water ingression. The use of Cu/Ni fastenings ensures that these remain free of fouling and are subsequently easily accessible for removal or inspection. Cu/Ni is also resistant to corrosion in seawater.

A modular installation of panels of suitable sizes can be built up to a desired length by overlapping the bevelled ends 4. An additional band 8 of 25 mm wide Cu/Ni, Fig. 2, is secured by tensioning it around the joints to further protect and strengthen the overall installation. The use of a soft compliant elastomer backing 7 of the nature described combined with a high strength panel 3 and fastening system averts the need for divers to work with messy adhesives and/or mastics and ensures a uniform water block which can be quickly installed and easily removed for subsequent inspection greatly reducing diver cost. This process can also be utilised to provide inspection covers for high stress welds particularly at joint nodes which have to be regularly inspected by divers. This eliminates costly regular diver cleaning of these and ensures early identification of the correct welds.

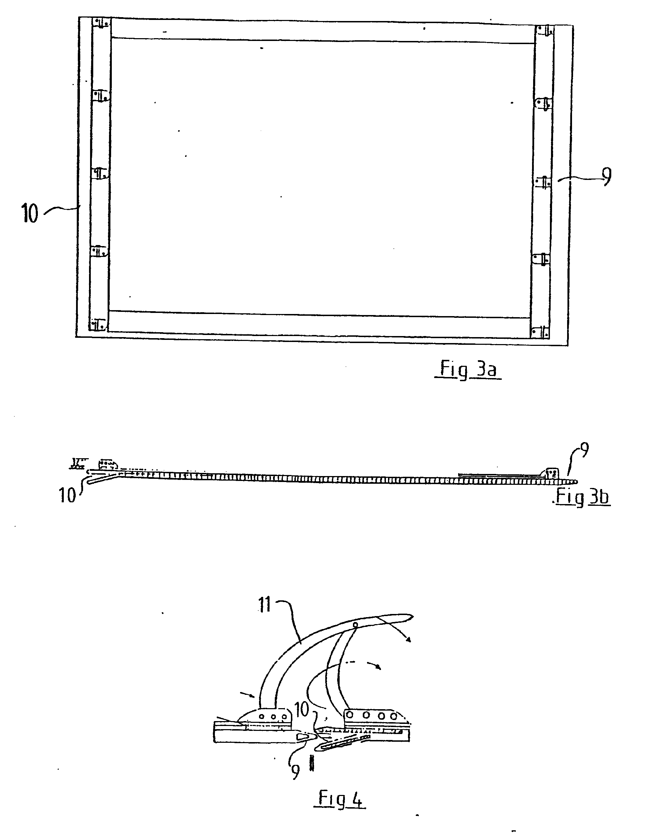

A second embodiment of an antifouling coating is illustrated in Fig. 3. In this case the coating has opposite ends formed as a complimentary tongue 9 and groove 10 formation. An overcentre locking clamp 11, Fig. 4, tensions the coating in position on a structural member in use.

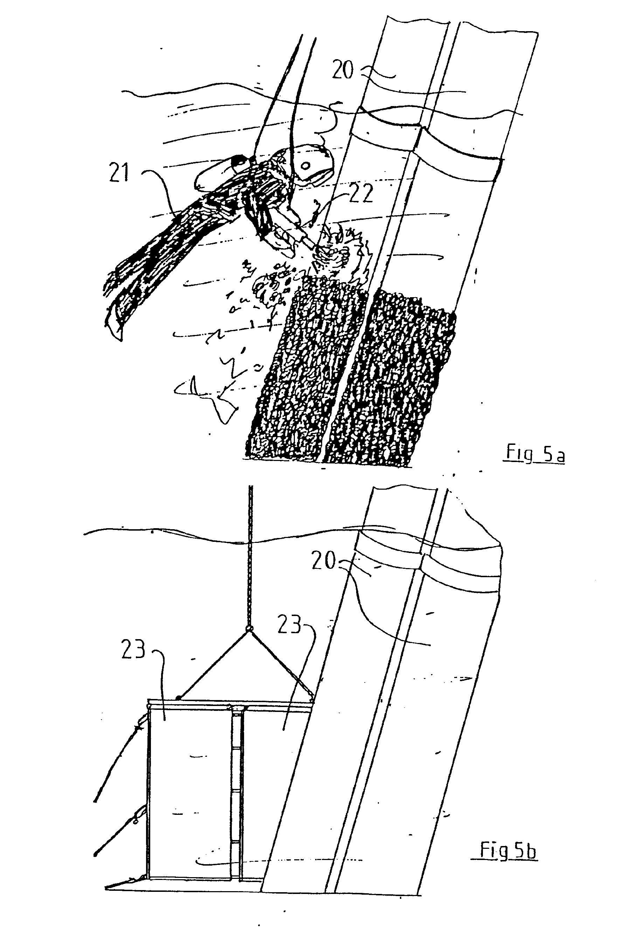

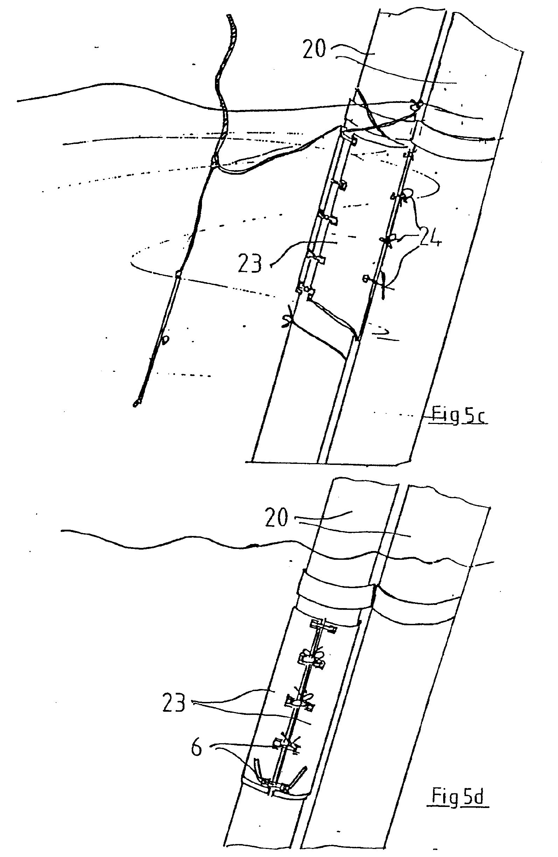

Figs. 5a to 5f illustrate the installation sequence of the coatings of Fig. 1 or Fig. 3 to a subsea structure in its working environment.

The tubular members 20 are first cleaned of fouling, marine growth and the like by a diver 21 using a water jet 22 (Fig. 5a). Antifouling coating panels 23 are then slung in position ready for installation (Fig. 5b). The panels are then installed around the tubular 20 at their correct positions and held in place by temporary fixings 24 (Fig. 5c).

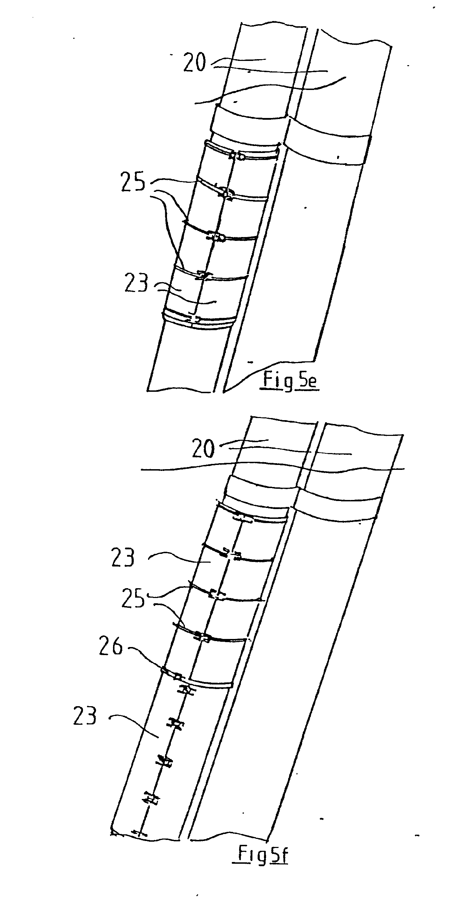

The fastening members 6 on the panel are then tensioned to fix the panel 23 firmly in position (Fig. 5d). Additional fixing straps 25 may be installed for extra strength (Fig. 5e).

Further lengths of panel may be installed with the overlapping joints being secured by 25 mm wide Cu/Ni bands 26 (Fig. 5f).

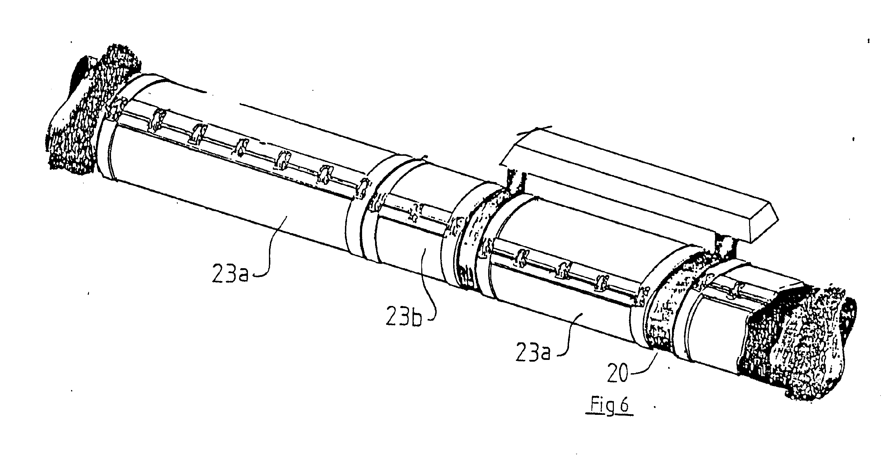

Fig. 6 illustrates the use of panels of varying lengths to conform to the various fittings on a structural member. In the illustrated installation two large panels 23a and one small panel 23b are shown.

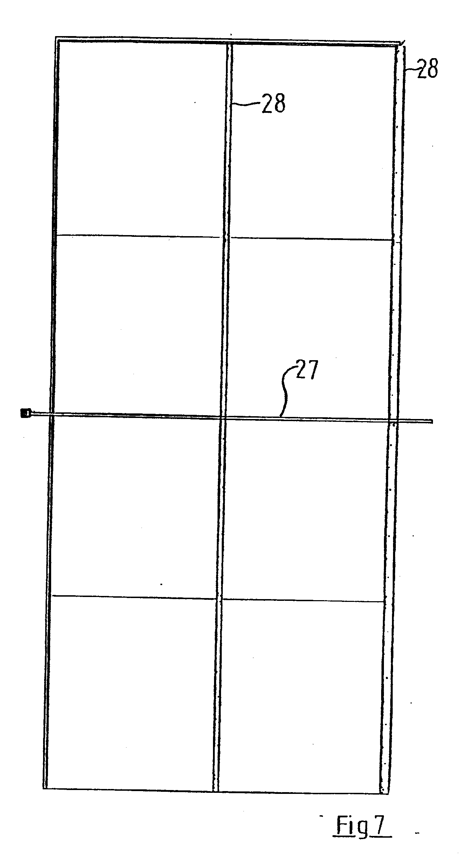

A further embodiment of an antifouling coating is illustrated in Fig. 7. In this embodiment the panel is provided with a fixing member in the form of a copper/nickel alloy band 27 which extends across the full width of the panel. In addition stiffening strips 28 are provided in the centre and at one edge of the panel.

Whichever embodiment of antifouling coating panel is used for a particular installation there is the advantage that the panel can be easily fitted to a subsea structure in a working environment at virtually any time. Each individual panel is of a size which allows easy handling by a diver.

Damage to the antifouling coating can be repaired by replacing one or more individual panels as necessary.

Various modifications, variations and improvements may be made without departing from the scope of the invention.

Alternative types of elastomer may be used depending on whether the panels are to be diver installed in the operating evironment or pre-installed in the construction site.

A 3 mm thick uncured layer of Hypalon compound at 40-45 IRD hardness suitable for room temperature vulcanising is used for diver installation and a 2 mm thick uncured layer of heat curing compound is used for construction site application. The diver installed varient is highly stable and resistant to drag or scuffing during installation. Under pressure it becomes highly plastic and moulds closely to substrate surfaces to prevent the need for mastics or adhesives. This backing is compounded with the biocide to prevent corrosion. In the diver installed varient the compound can be formulated for a variety of curing times up to twelve months to facilitate good shelf life in storage.

Panels may also be produced having antifouling surfaces other than copper based and it is also envisaged that materials such as Teflon may be used in place of the elastomeric material.

The panels may also be pre curved to provide for easier installation.

## CLAIMS

1. An antifouling material for structural members comprising a sheet of material having antifouling properties, the sheet being extendable around said structural member such that opposite end portions of the sheet lie adjacent to one another, and fastening means being provided to affix the sheet under tension on the structural member.

2. An antifouling material as claimed in Claim 1, wherein the sheet of material is a copper alloy and elastomeric material compound.

3. An antifouling material as claimed in Claim 1 or 2, wherein the elastomeric material conforms to surface irregularities on the structural member.

4. An antifouling material as claimed in Claim 2 or 3, wherein the elastomeric material has its inner surface coated with a formulation of elastomeric compound and corrosion inhibitor.

5. An antifouling material as claimed in Claim 4, wherein the corrosion inhibitor is a biocide which destroys the bacteria which cause corrosion.

6. An antifouling material as claimed in any one of the preceding Claims, wherein the fastening means is in the form of copper-containing material fastening members.

7. An antifouling material as claimed in Claim 6, wherein the fastening member is in the form of a strap and buckle fastener.

8.  An antifouling material as claimed in Claim 6, wherein the fastening member is in the form of an over centre buckle.

9.  An antifouling material as claimed in any one of the preceding Claims, wherein the sheet of material has bevelled edges such that adjacent sheets may be effectively sealed one to another.

0188358

1/8

Fig 1a

Fig 1b

Fig 1c

Fig 2a

Fig 2b

_Fig 3a_

_Fig 3b_

_Fig 4_

Fig 5a

Fig 5b

Fig 5c

Fig 5d

Fig 5e

Fig 5f

Fig.6

Fig 7